# FASCICULE DE BREVET EUROPEEN

(11) **EP 3 185 051 B1**
(45) Date de publication et mention de la délivrance du brevet: **11.03.2020**
(21) Numéro de dépôt: 17155702.8
(22) Date de dépôt: 13.05.2009
(51) Int. Cl.: G02B 3/00, G02B 27/22, B41M 3/00, B29D 11/00

(54) **ELEMENTS OPTIQUES IMPRIMÉS**
GEDRUCKTE OPTISCHE ELEMENTE
PRINTED OPTICAL MEMBERS

(30) Priorité: 13.05.2008 FR 0802556; 15.05.2008 FR 0802636; 26.05.2008 FR 0802819; 26.05.2008 FR 0802821; 02.06.2008 FR 0803024; 07.07.2008 FR 0803831; 17.07.2008 FR 0804067; 05.08.2008 FR 0804451; 11.09.2008 FR 0804981; 23.09.2008 FR 0805222; 13.10.2008 FR 0805642; 18.11.2008 FR 0806433; 18.11.2008 FR 0806434; 08.12.2008 FR 0806855; 12.12.2008 FR 0806995; 30.12.2008 FR 0807499; 19.01.2009 FR 0900222
(43) Date de publication de la demande: 28.06.2017
(62) Demande divisionnaire de: 09757729.0
(73) Titulaire: Guigan, Franck, 75017 Paris (FR); Guigan, Martine, 75017 Paris (FR); Guigan, Antoine, 75017 Paris (FR); Guigan, Charles, 75015 Paris (FR); Guigan, Pierre, 92100 Boulogne Billancourt (FR)
(72) Inventeur: Guigan, Franck, 75017 Paris (FR); Guigan, Martine, 75017 Paris (FR); Guigan, Antoine, 75017 Paris (FR); Guigan, Charles, 75015 Paris (FR); Guigan, Pierre, 92100 Boulogne Billancourt (FR)
(74) Mandataire: IP Trust

(56) Documents cités:
- US-A- 1 918 705
- US-A- 3 241 429
- US-A- 5 330 799
- US-A- 5 707 684
- US-A1- 2002 027 300
- US-B1- 6 297 911

## Description

### Domaine technique

La présente invention concerne des dispositifs comprenant des éléments optiques très variés comme par exemple des lentilles convexes de tous types, cylindriques ou sphériques, à pupilles circulaires, hexagonales ou carrées, des fibres optiques, des guides d'ondes, des coupleurs, des mélangeurs et des interrupteurs placés sur toutes sortes de substrats pour créer des circuits optiques et optoélectroniques. Elle concerne aussi un procédé d'impression d'éléments optiques mettant en œuvre des techniques d'impression connues et bon marché comme l'offset, l'héliographie, la flexographie, la sérigraphie, la tampographie et le jet d'encre par exemple, qui utilisent toutes de l'encre liquide.

Les caractéristiques communes aux éléments optiques imprimés sont qu'ils doivent avoir une « âme » transparente, être isolés de leurs voisins par de l'air, une matière transparente d'indice différent ou une surface réfléchissante, et avoir une forme très précise correspondant à leur fonction, tout en occupant le moins de place possible pour pouvoir être miniaturisés.

Le problème à résoudre est d'éviter la coalescence entre éléments voisins pendant l'impression, puisque ces éléments commencent par exister à l'état liquide, la coalescence étant le phénomène qui fait que deux gouttes d'encre trop proches l'une de l'autre fusionnent en une seule.

### Technique antérieure

On connaît plusieurs brevets permettant de réaliser des réseaux de lentilles optiques, mais qui utilisent des techniques sortant du cadre des méthodes d'imprimerie :
- US-A-5 330 799 décrit une méthode de moulage mécanique,
- US 6 297 911 B1 décrit une méthode consistant à déposer sur des surfaces un produit solide et à le chauffer pour lui donner la convexité souhaitée,
- US-A-5 694 246 comporte aussi une étape de chauffage,
- US 2005/133688 A1 met en œuvre une source de pulvérisation à un angle de la surface du support,
- US 2006/262410 A1 prévoit la transformation par chauffage d'une ébauche convexe en surface concave,
- US 7 428 103 décrit une méthode de fabrication de réseau lenticulaire mettant en œuvre un processus de « reflow », une méthode connue de « re-fusion » consistant à chauffer - généralement dans un four - un ensemble de deux types d'éléments (ici l'ensemble d'ébauches de microlentilles et le substrat), pour former un lien solide et durable entre deux éléments.

On connaît aussi plusieurs brevets permettant de réaliser des éléments optiques imprimés de toutes sortes, mais en mettant en oeuvre exclusivement des techniques d'imprimerie par traçage consistant à déposer un matériau avec un robot qui suit un trajet défini : US 5 723 176 A, US 2005/0088750 A1 et US 5 707 684 A. Ces méthodes ne sont pas adaptées à une production en grande série. Les auteurs se sont limités à ce type de production très lent et très coûteux parce que les solutions techniques qu'ils proposent ne permettent pas l'utilisation de techniques d'imprimerie en grande série. On connaît enfin plusieurs brevets mettant en œuvre des techniques d'imprimerie de grande série pour obtenir des réseaux de lentilles optiques : WO 99/36830, US-A3 622 384, PCT/JP94/01634, US 6 481 844, US 6 833 960 et US 6 856 462, mais aucun ne propose un moyen permettant d'éviter la coalescence, et ne permet donc de réaliser des lentilles optiques jointives entre elles, ou des fibres optiques, ce qui est l'objectif poursuivi par tous les chercheurs depuis longtemps, afin de faire baisser les prix des éléments optiques, et en particulier des réseaux lenticulaires, des fibres optiques, et des cartes optoélectroniques qui sont l'avenir de l'informatique et des télécommunications.

### Exposé de l'invention

La présente invention est un dispositif comportant plusieurs éléments dits « éléments optiques imprimés » imprimés par une technique d'impression à balayage sur un support d'impression, caractérisé par le fait qu'un élément optique imprimé est constitué d'une protubérance convexe transparente dite « âme » recouverte d'au moins une couche d'encre dite « couche supplémentaire » pour constituer une protubérance convexe, étant précisé que l'on entend ci-avant et ci-après par « technique d'impression à balayage » une technique d'impression qui - comme par exemple l'impression à jet d'encre par balayage - consiste à déposer une substance liquide dite ci-après « encre » sur un support d'impression,
- d'un seul coup, ou par bandes successives d'un bord dudit support d'impression au bord opposé, par opposition à une technique d'impression par traçage, qui consiste à déplacer un dispositif de dépôt le long de chacune des courbes à tracer sur ledit support d'impression,
- l'encre étant déposée à l'état liquide, par opposition à des techniques de fabrication comportant le dépôt d'une substance solide transformée ensuite, par exemple par chauffage, en dépôt liquide.

La présente invention est aussi un procédé de fabrication d'éléments optiques imprimés consistant des étapes de la revendication une.

### Description sommaire des dessins

L'invention sera bien comprise, et d'autres buts, avantages et caractéristiques de celle-ci apparaîtront plus clairement à la lecture de la description qui va suivre, laquelle est illustrée par les dessins annexés, sur lesquels :
- La figure 1 est une vue en perspective d'un réseau lenticulaire selon l'invention,
- La figure 2 est une vue en coupe de deux éléments optiques juxtaposés avec une coalescence survenue entre des couches de ces éléments optiques juxtaposés,
- La figure 3 est une vue en coupe de deux éléments optiques juxtaposés similaires, séparés par un volume de séparation, qui empêche cette coalescence,
- La figure 4 est une vue en coupe de quatre éléments optiques juxtaposés, imprimés sur un support dont la surface supérieure a une tension superficielle basse,
- Les figures 5a à 5e sont des vues de dessus illustrant l'application aux lentilles sphériques de la méthode consistant à appliquer des couches qui sont de plus en plus grandes,
- Les figures 6a à 6e sont des vues en perspective illustrant l'application aux lentilles sphériques de la méthode consistant à appliquer une première couche ne comportant que des ébauches de lentilles, avec une encre à haute tension superficielle, sur un à-plat dont la tension superficielle est plus faible,
- La figure 7 est une vue en perspective d'une fibre optique imprimée connectée à un redresseur, dont les parois latérales réfléchissent les rayons en les rendant plus parallèles à l'axe longitudinal de ladite fibre,
- La figure 8 est une vue en perspective d'un dispositif relativement similaire à plusieurs étages, commençant par un concentrateur à ciel ouvert, qui récupère les rayons lumineux ambiants par sa face supérieure,
- La figure 9 est une vue en perspective d'une nappe de fibres optiques juxtaposées,
- La figure 10 est une vue en perspective d'un connecteur entre une première nappe de fibres optiques et une deuxième nappe de fibres optiques,
- La figure 11 est une vue en perspective d'une série de couches d'encre constituant une surface courbe sur laquelle est imprimée une image codée élémentaire courbe coopérant avec une lentille élémentaire d'un réseau lenticulaire,
- La figure 12 montre quatre images codées élémentaires ainsi construites,
- La figure 13 est une vue en perspective de trois images codées élémentaires courbes principales, complétées de trois images codées élémentaires courbes supplémentaires qui sont superposées aux images élémentaires courbes principales, et visibles de certains points de vue seulement,
- La figure 14 est une vue en perspective d'un réseau lenticulaire selon l'invention, placé dans un dispositif de vision à détermination de la parallaxe qui comprend une boule miroir,
- La figure 15 est un schéma en perspective d'un écran de télévision imprimé selon l'invention,
- La figure 16 est une vue en perspective d'un écran selon l'invention, comportant une partie recevant l'image d'un projecteur sur les extrémités amont de fibres optiques imprimées arrangées en une nappe vers un tel écran de télévision,
- La figure 17 est une vue en perspective d'un réseau lenticulaire selon l'invention, dont les lentilles élémentaires sont asphériques - déformées en largeur pour que des rayons parallèles atteignant une telle lentille convergent sur un segment horizontal et non pas sur un point,
- La figure 18 est une vue en perspective d'un réseau lenticulaire double, transparent, comportant des premières lentilles élémentaires, ainsi que des deuxièmes lentilles élémentaires situées en vis-à-vis des premières,
- Les figures 19a, 19b et 19c sont trois vues en perspective d'un dispositif selon l'invention dans une mise en œuvre particulière permettant l'enroulement du dispositif pour son transport ou pour les dispositifs d'affichage proposant plusieurs visuels qui se succèdent par enroulement des affiches sur une bobine, et
- La figure 20 est une vue en perspective d'un capteur de lumière selon l'invention.

### Description détaillée de modes particuliers de réalisation de l'invention

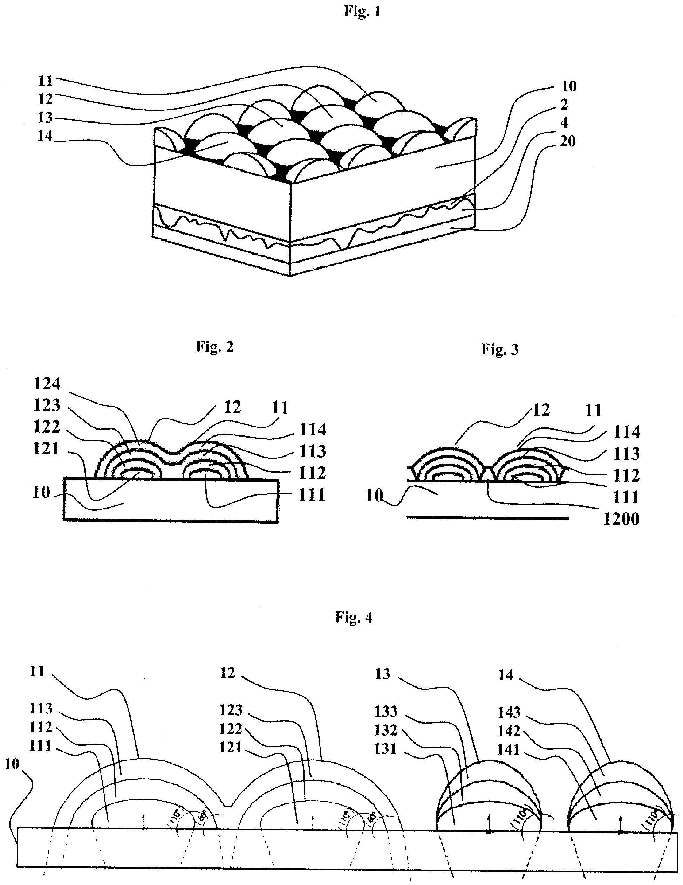

Sur la figure 1 qui est une vue en perspective d'un réseau lenticulaire selon l'invention, on peut distinguer des lentilles élémentaires 11, 12, 13 et 14, le support d'impression 10 des lentilles, le support 20 d'impression de l'image codée 2, l'image codée 2 dont l'épaisseur d'encre est variable selon les emplacements, et le volume de création de relief 4 qui est imprimé sur le support 20 avant l'impression de l'image codée pour que la face supérieure de cette dernière soit plate, confondue avec le plan de focalisation desdites lentilles élémentaires.

La figure 2 est une vue en coupe de deux éléments optiques juxtaposés avec une coalescence survenue entre des couches de ces éléments optiques, 11 et 12 juxtaposés, chacun composé de plusieurs couches d'encre, l'élément optique 11 respectivement 12 comprenant une première couche (l'« âme ») 111 respectivement 121, et des couches suivantes (les couches « supplémentaires ») 112, 113, 114 respectivement 122, 123, 124. Cette figure montre une coalescence survenue entre les couches 113 et 123 des éléments optiques 11 et 12.

La figure 3 est une vue en coupe de deux éléments optiques 11 et 12 juxtaposés similaires, séparés par un volume de séparation 1200, qui empêche cette coalescence,. La figure 4 est une vue en coupe de quatre éléments optiques 11 à 14 juxtaposés, imprimés sur un support dont la surface supérieure a une tension superficielle basse. Elle illustre l'utilisation d'à-plats de tensions superficielles différentes sur un support à basse tension superficielle ayant reçu dans une première étape des âmes imprimées par une encre à haute tension superficielle.

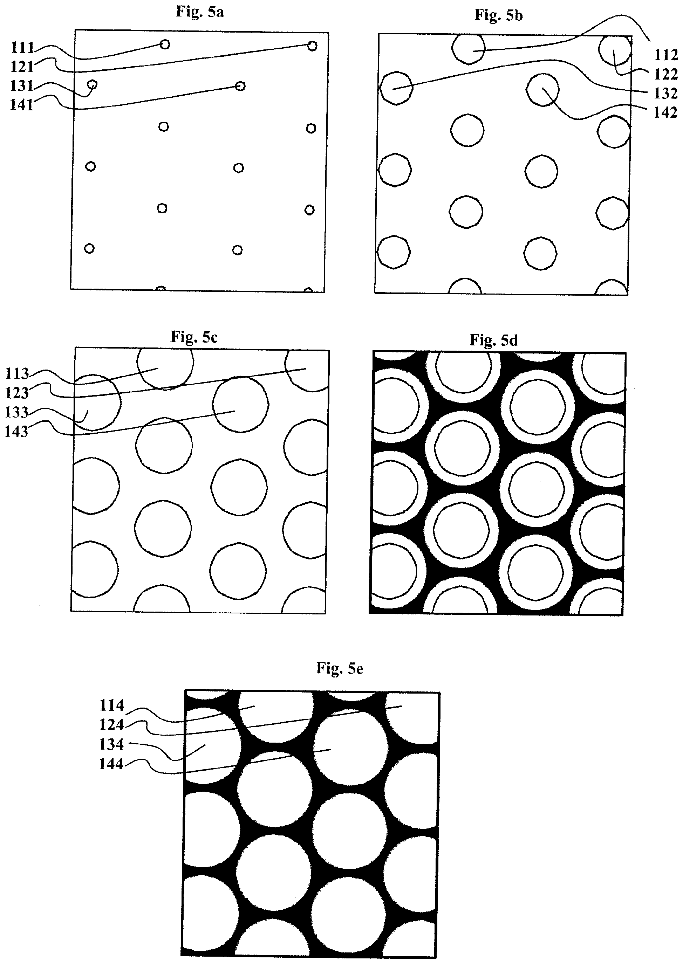

Les figures 5a à 5e sont des vues de dessus illustrant l'application aux lentilles sphériques de la méthode consistant à appliquer des couches 111 à 114, 121 à 124, 131 à 134, 141 à 144 qui sont de plus en plus grandes.

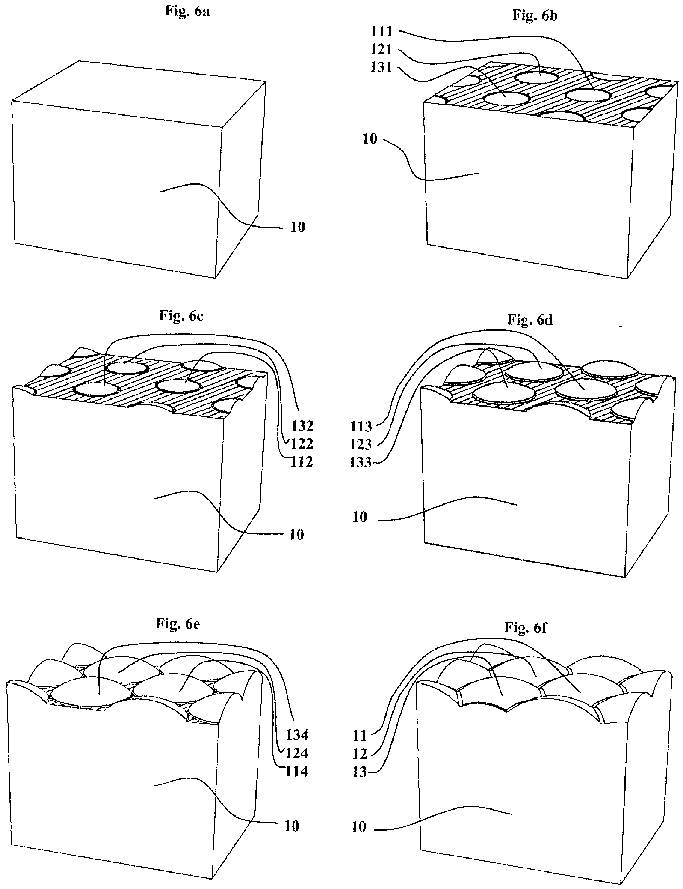

Les figures 6a à 6e sont des vues en perspective illustrant l'application aux lentilles sphériques de la méthode consistant à appliquer une première couche ne comportant que des ébauches de lentilles 111, 121, 131, avec une encre à haute tension superficielle, sur un à-plat (identifié par des hachures) dont la tension superficielle est plus faible. On applique ensuite des à-plats à haute tension superficielle (couches 112, 122, 132 ; 113, 123, 133 ; 114, 124, 134) qui sont chassés par la partie hachurée pour faire grossir progressivement chaque lentille, jusqu'à ce qu'on obtienne des lentilles accolées 11, 12, 13.

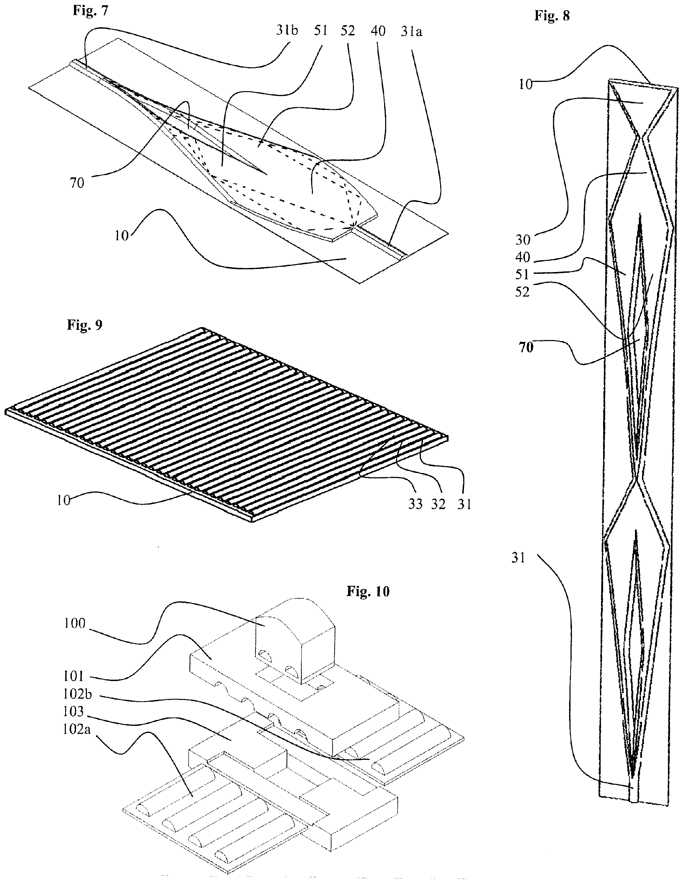

La figure 7 est une vue en perspective d'une fibre optique imprimée 31a connectée à un redresseur 40, dont les parois latérales réfléchissent les rayons en les rendant plus parallèles à l'axe longitudinal de ladite fibre 31a. Les rayons sont ensuite concentrés par deux concentrateurs 51 et 52 séparés par une fente 70, pour passer à travers la fibre 31b. L'axe d'un rayon lumineux transporté par la fibre 31 est plus proche de l'axe longitudinal de la fibre 31b qu'ils ne l'étaient de la fibre 31a.

La figure 8 est une vue en perspective d'un dispositif relativement similaire à plusieurs étages, commençant par un concentrateur à ciel ouvert, qui récupère les rayons lumineux ambiants par sa face supérieure.

La figure 9 est une vue en perspective d'une nappe de fibres optiques juxtaposées 31, 32 et 33.

La figure 10 est une vue en perspective d'un connecteur entre une nappe 102a de fibres optiques et une nappe 102b de fibres optiques. Deux éléments réfléchissants 101 et 103 épousent les surfaces recto et verso desdites nappes, et assurent la transmission des rayons lumineux de l'une à l'autre. La partie mobile 100, également réfléchissante, permet de bloquer ou de laisser passer les rayons lumineux, selon sa position plus ou moins enfoncée. Un tel dispositif est un interrupteur mécanique.

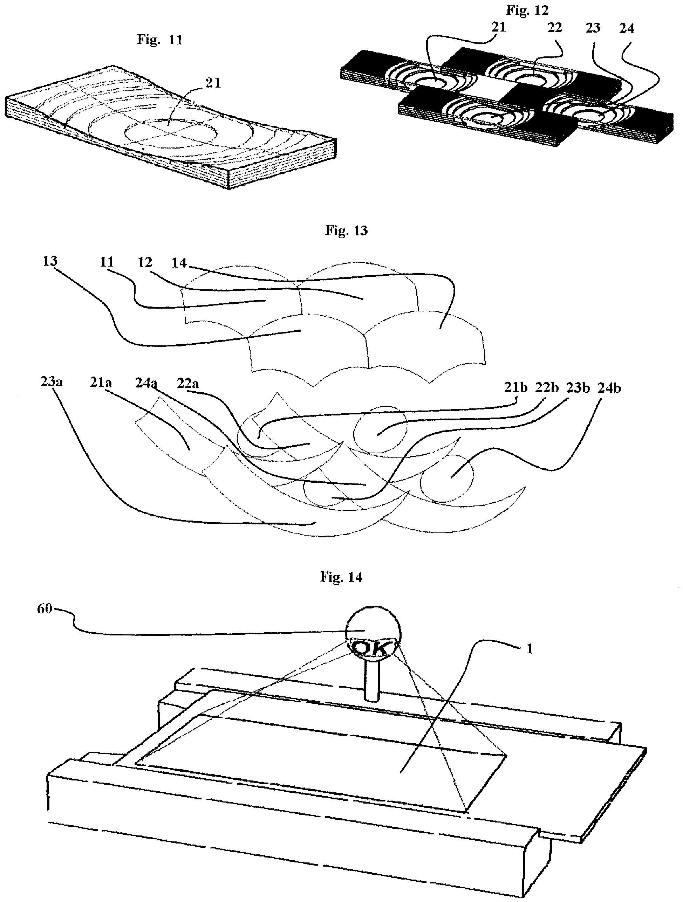

La figure 11 est une vue en perspective d'une série de couches d'encre constituant une surface courbe sur laquelle est imprimée une image codée élémentaire 21 courbe coopérant avec une lentille élémentaire 11 d'un réseau lenticulaire.

La figure 12 montre quatre images codées élémentaires 21 à 24 ainsi construites.

La figure 13 est une vue en perspective de trois images codées élémentaires courbes principales notées 21a, 22a 23a et 24a, complétées de trois images codées élémentaires courbes supplémentaires notées 21b, 22b et 23b et 24b qui sont superposées auxdites images élémentaires courbes dites principales, et visibles de certains points de vue seulement.

La figure 14 est une vue en perspective d'un réseau lenticulaire 1 selon l'invention, placé dans un dispositif de vision à détermination de la parallaxe qui comprend une boule miroir 60.

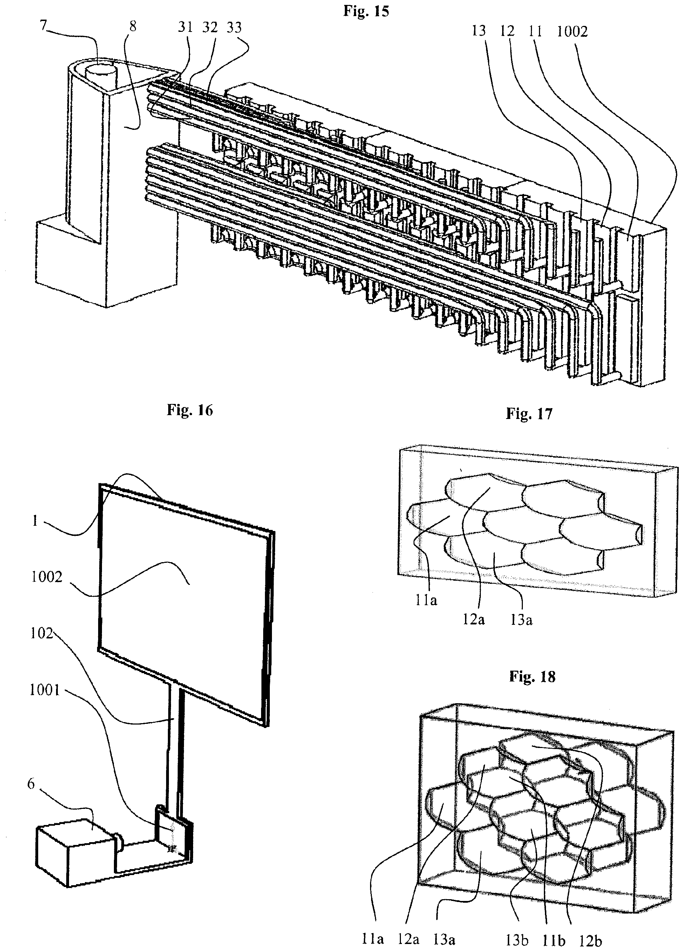

La figure 15 est un schéma en perspective d'un écran de télévision imprimé selon l'invention. Des voyants 11, 12 et 13 constituent les extrémités des fibres optiques imprimées 31 32 et 33, lesquelles reçoivent la lumière d'une source lumineuse 7 qui est codée par un panneau à cristaux liquides 8.

La figure 16 est une vue en perspective d'un écran 1 selon l'invention, comportant une partie 1001 recevant l'image d'un projecteur 6 sur les extrémités amont de fibres optiques imprimées arrangées en une nappe 102 vers une partie 1002 qui est un tel écran de télévision.

La figure 17 est une vue en perspective d'un réseau lenticulaire selon l'invention, dont les lentilles élémentaires 11a, 12a et 13a sont asphériques - déformées en largeur pour que des rayons parallèles atteignant une telle lentille convergent sur un segment horizontal et non pas sur un point. La face arrière dudit réseau lenticulaire n'est pas placée exactement dans le plan focal de ses lentilles élémentaires et est blanc. Un tel dispositif est un écran de projection. La lumière issue du projecteur donne lieu derrière chaque lentille à une tache lumineuse allongée horizontalement, qui est visible depuis un domaine de visibilité que l'homme de l'art sait calculer.

La figure 18 est une vue en perspective d'un réseau lenticulaire double, transparent, comportant des lentilles élémentaires 11a, 12a et 13a, ainsi que des lentilles élémentaires 11b, 12b et 13b situées en vis-à-vis des premières. L'épaisseur du dispositif est sensiblement égale au total des longueurs focales des lentilles élémentaires recto et verso. La lumière projetée par un projecteur sur une face du dispositif est retransmise par une lentille vers la surface de la lentille située en vis-à-vis, et redressée par cette dernière pour être visible depuis un domaine de visibilité que l'homme de l'art sait aussi calculer.

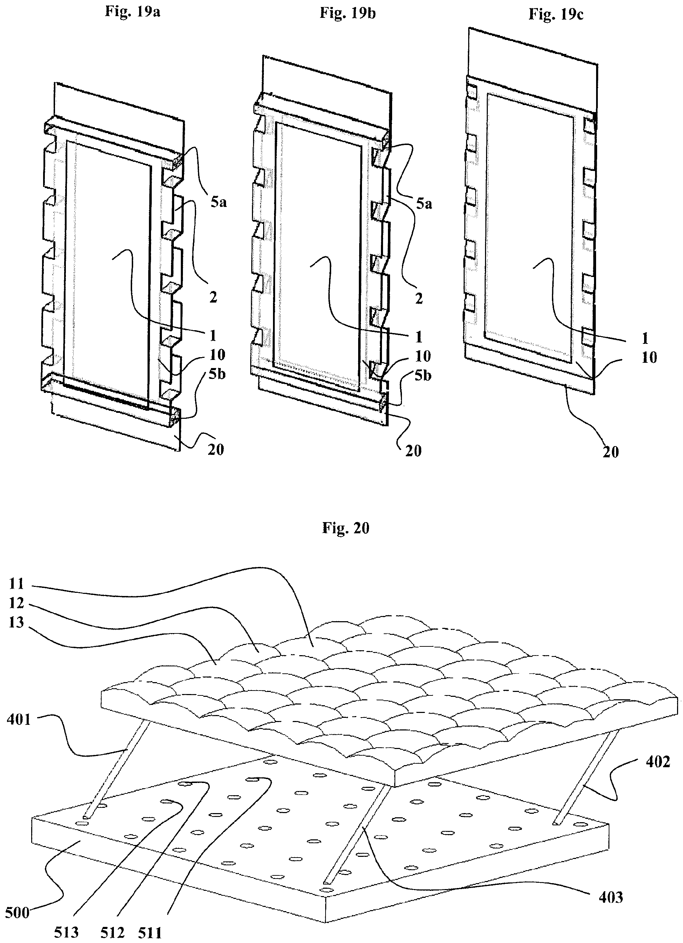

Les figures 19a, 19b et 19c sont trois vues en perspective d'un dispositif selon l'invention dans une mise en œuvre particulière permettant l'enroulement du dispositif pour son transport ou pour les dispositifs d'affichage proposant plusieurs visuels qui se succèdent par enroulement des affiches sur une bobine. Le dispositif est en position de fonctionnement à la figure 19a et aplati pour le transport ou l'enroulement à la figure 19c. La figure 19b montre une position intermédiaire.

Selon l'invention, il faut que les âmes décrites plus haut soient suffisamment espacées les unes des autres pour que des phénomènes de tension superficielle ne puissent pas entraîner la fusion de deux âmes voisines en une seule avant qu'elles ne soient devenues solides.

La couche dite supplémentaire est indispensable parce que c'est elle qui permet de finaliser la forme d'un élément optique sans que son âme fusionne avec celle de son voisin.

Une première méthode, préférée, présente l'avantage de ne pas avoir à repérer les couches d'encre les unes par rapport aux autres. Elle consiste à créer des repères à chaque emplacement prévu pour une protubérance, soit en imprimant ce repère avec une encre à tension superficielle plus élevée que celle du support, soit en imprimant la partie qui n'est pas un repère avec une encre à tension superficielle moins élevée que celle du support. On imprime ladite première couche d'encre sous forme d'un à-plat d'encre à tension superficielle nettement plus élevée que celle de la zone ne comprenant pas de repères, et l'encre de cette première couche ne reste pas sur le reste du support. Elle est attirée vers les repères et forme une ébauche de protubérance. On imprime ensuite une ou plusieurs couches dites supplémentaires d'encre - toujours sous forme d'un à-plat et toujours en utilisant une encre à plus haute tension superficielle que la partie du support non recouverte d'ébauches de protubérances - afin que l'encre de chaque à-plat successif soit attirée vers la zone déjà recouverte de protubérances et fasse grossir les protubérances. Une telle méthode est illustrée par les figures 6a à 6f. La création des repères peut se faire en imprimant les emplacements prévus pour devenir des repères, ou le reste du support, avec toute technique d'impression connue comme l'offset (très précis) ou même déposée sous forme non liquide comme par exemple par une imprimante laser.

L'impression des repères et celle de ladite première couche peuvent être confondues. Les âmes créées par ladite première couche constituent alors les repères utilisés pour les couches supplémentaires.

La figure 4 illustre l'intérêt qu'il y a à choisir convenablement l'encre utilisée pour l'impression des âmes et des couches supplémentaires. La tension superficielle des âmes 111, 121, 131 et 141 des quatre éléments optiques est identique, et très élevée, ce qui a pour conséquence que l'angle de contact entre lesdites âmes et le support est très élevé, de 110°. On a déposé ensuite deux couches d'à-plat d'encre sur la totalité de la surface du support 10. Les lentilles 13 et 14 ont reçu de l'encre qui a la même tension superficielle que celle utilisée pour les âmes, lesquelles ont donc grandi verticalement (couches supplémentaires 132, 133 et 142, 143), tandis que l'encre utilisée pour les lentilles à-plat d'encre sur la surface contenant les lentilles 11 et 12 avait une tension superficielle légèrement inférieure, ce qui a eu pour conséquence que l'angle de contact entre d'une part lesdites couches superficielles 112 et 113 de l'élément 11, et 122 et 123 de l'élément 12, et le support d'autre part est moins élevé, de 80° seulement. Les lentilles 11 et 12 ont donc grandi en s'élargissant. En jouant sur les tensions superficielles, cette première méthode préférée permet ainsi de réaliser des lentilles à très courte longueur focale, ce qui est très favorable à certaines applications comme les étiquettes de produits par exemple.

Une seconde méthode consiste à n'imprimer avec ladite première couche qu'une ébauche de chaque protubérance, ladite ébauche étant complétée ensuite par le dépôt d'une couche d'encre supplémentaire. Une couche dite supplémentaire est avantageusement appliquée sur une surface sensiblement plus petite ou plus grande que celle sur laquelle a été appliquée ladite première couche, selon la forme que l'on souhaite donner à la protubérance concernée. Il faut noter que dans de nombreux cas, imprimer deux couches d'encre sur des surfaces identiques a pour effet que la seconde couche d'encre couvre une surface plus large que la première. C'est donc une solution avantageuse lorsqu'on utilise une imprimante à jet d'encre qui réalise plusieurs passages de la tête d'impression en imprimant le même programme d'impression de lentilles, parce que cela aboutit à déposer de l'encre sur une surface sensiblement plus grande que celle de la protubérance créée par la couche précédente.

Une troisième méthode consiste à ce qu'une couche d'encre ne concerne qu'un premier sous-ensemble des protubérances projetées, constituée de protubérances plus espacées entre elles que deux protubérances projetées immédiatement voisines, et que d'autres sous-ensembles de protubérances sont imprimées ultérieurement, après durcissement dudit premier sous-ensemble de protubérances. Ladite première couche concerne une lentille cylindrique sur deux, ou une lentille sphérique sur trois. Les premières âmes ainsi créées ne se touchent pas et on complète l'ensemble des éléments optiques avec la couche suivante.

Une quatrième méthode consiste à créer avec une des couches d'encre des barrières physiques 1200 pour gêner l'étalement d'une couche d'encre ultérieure en dehors des zones prévues pour les protubérances, comme décrit à la figure 3.

Dans toutes les méthodes précédemment exposées, il est avantageux d'utiliser une encre aqueuse pour réaliser une couche dite supplémentaire, parce que ces encres peuvent avoir des tensions superficielles très élevées. C'est particulièrement avantageux pour la dernière couche qui forme la pellicule de surface des éléments optiques.

La présente invention permet aussi de réaliser des réseaux lenticulaires doubles - comportant des lentilles à la fois au recto et au verso - repérés automatiquement avec une grande précision entre le recto et le verso du support d'impression 10. Une surface imprimée au recto, comme par exemple un repère, une ébauche de protubérance ou une protubérance finie, sert de repère pour l'impression au verso du support d'impression 10, de la façon suivante : on imprime au verso du support d'impression 10 qui est transparent au rayonnement UV un à-plat d'un produit durcissable par rayonnement UV, on émet un rayonnement UV depuis le côté recto vers le côté verso du support et, selon la nature de la protubérance, transparente et convexe, ou opaque aux rayons UV, certaines zones de l'à-plat d'encre appliqué au verso sont durcies et d'autres non. Il ne reste plus qu'à supprimer l'encre non durcie subsistant au verso. On peut alors, avec ladite première méthode, imprimer des lentilles élémentaires au verso du support d'impression 10.

Cette méthode peut être mise en œuvre de deux façons selon que l'encre imprimée au verso sous forme d'un à-plat a une tension superficielle plus élevée ou moins élevée que celle du reste de la surface du verso. Dans le premier cas, le rayonnement UV durcit l'encre située en vis-à-vis d'une ébauche de lentille convexe ou d'une lentille finie. Dans le second, il durcit l'encre située dans une zone qui n'est pas cachée par un repère.

La méthode préférée est la suivante :
∘ le support d'impression est transparent, son recto comprend des lentilles élémentaires ou des ébauches de lentilles élémentaires, et son verso a une tension superficielle basse,
∘ on imprime un à-plat à haute tension superficielle sur le verso, sans le durcir immédiatement,
∘ on émet un rayonnement UV depuis le côté recto vers le côté verso du support, ce qui a pour effet de durcir les emplacements du verso situés dans l'alignement de la source UV et des centres optiques desdites lentilles élémentaires,
∘ on supprime l'encre non durcie subsistant au verso,
∘ on imprime au verso une couche d'encre dite première couche sous forme d'un à-plat dont l'encre est attirée par sa tension superficielle élevée vers les repères,

Le rayonnement UV peut être émis à partir d'une source diffuse ou linéaire ou ponctuelle. Il peut être émis d'une position déterminée par l'homme de l'art pour créer une différence de parallaxe afin de disposer les lentilles du verso à une distance plus grandes les unes des autres que celles du recto.

On peut utiliser cette méthode pour créer deux lentilles convergentes asphériques au recto et au verso d'un support d'impression 10, l'une au recto et l'autre au verso, comme en particulier des lentilles qui sont toutes les deux des portions de volumes de révolution ayant le même axe de révolution. L'avantage est que, lorsque les lentilles sont déformées en largeur pour être chacune une ellipsoïde plus large que haut, le dispositif est un écran de rétroprojection qui diffuse les rayons lumineux issus du projecteur vers un domaine de visibilité plus large que haut.

Plusieurs autres méthodes peuvent être utilisées dans le cadre de la présente invention pour créer des éléments optiques imprimés, en combinaison ou non avec les méthodes déjà décrites.
- On dépose une couche qui est un primaire d'accrochage, puis une couche dite supplémentaire qui est une encre ayant une grande affinité pour ledit primaire.
- On applique une tension électrique sur le support d'impression avant l'impression d'une couche d'encre, uniquement aux emplacements sur lesquels on veut imprimer une protubérance.
- On applique une tension électrique sur une couche d'encre avant son dépôt.
- On brûle superficiellement le support d'impression avant l'impression de ladite première couche d'encre, uniquement aux emplacements sur lesquels on veut imprimer une protubérance.
- On applique un effet Corona, c'est-à-dire un bombardement d'électrons et d'ions, sur la surface du support d'impression 10, avant l'impression d'une couche d'encre.
- On gèle, on cuit ou on brûle le matériau du support d'impression 10, soit sur toute la surface appelée à recevoir des éléments optiques, soit uniquement au centre des emplacements appelés à recevoir un élément optique élémentaire.
- On modifie la surface du centre des emplacements appelés à recevoir un élément optique élémentaire par tout moyen mécanique connu, pour favoriser l'adhérence de ladite première couche, qui peut alors être imprimée sous forme d'un à-plat.

Plusieurs améliorations des méthodes décrites ci-avant sont proposées :
- on choisit de durcir ou de ne pas durcir une couche dite supplémentaire avant l'impression de la suivante, pour augmenter ou diminuer l'épaisseur et la courbure de l'élément optique considéré, en tenant compte de la viscosité et l'énergie superficielle de l'encre utilisée.
- On dépose une ou plusieurs couches d'une substance quelconque pour créer un volume de création de relief 4 sur le support d'impression 20, avant d'imprimer l'image codée 2, pour que l'image codée ait une surface la plus plane possible. Avantageusement, l'épaisseur dudit volume de création de relief 4 est sensiblement égale à l'épaisseur maximale de l'image codée 2, diminuée de l'épaisseur de l'encre effectivement déposée à l'emplacement considéré de l'image codée 2 pour créer ladite image codée 2.
- On ôte l'encre qui n'est pas accrochée à la surface du support d'impression 10, avant sa solidification, par tout moyen de lavage ou de nettoyage connu. Avantageusement, le nettoyage d'une couche d'encre 1 est fait avec un outil de nettoyage assez rigide pour ne pas toucher les espaces entre les protubérances. C'est particulièrement intéressant lorsque la couche nettoyée est noire parce que le creux entre les lentilles élémentaires n'est pas efficace optiquement, ou l'est peu.
- le durcissement de certaines zones sélectionnées d'une couche d'encre est obtenu par l'émission d'un rayon lumineux concentré provoquant ou accélérant la polymérisation desdites zones sélectionnées, afin d'obtenir des formes plus complexes que celles obtenues par la seule action de la tension superficielle de l'encre.
- On dépose une encre sous forme d'un à-plat sur l'ensemble de la surface comportant des protubérances ou des ébauches de protubérances, et on laisse cette encre tomber entre les protubérances par gravité. Un perfectionnement de cette méthode consiste à augmenter - momentanément ou de façon permanente - la tension superficielle de la surface située entre lesdites protubérances avant le dépôt de ladite couche supplémentaire. Avantageusement, l'encre déposée entre les protubérances peut être à basse tension superficielle pour repousser ultérieurement d'autres à-plats d'encre à haute tension superficielle vers les protubérances.
- On dépose par électrostatisme une feuille transparente sur la face du réseau lenticulaire opposée à celle contenant les lentilles élémentaires 11, 12, 13 et suivantes, avant d'imprimer l'image codée 2, et on imprime l'image codée non pas sur le verso du support d'impression 10 mais sur ladite feuille transparente. Cela permet de changer facilement de visuel tout en réutilisant le même réseau lenticulaire.

Plusieurs modes de mise en œuvre peuvent être envisagés, sans sortir du cadre de la présente invention.
- Un film intermédiaire 10 est apposé sur l'image codée avant l'impression des lentilles élémentaires sur ledit film intermédiaire.
- Un film intermédiaire comportant les lentilles élémentaires imprimées est apposé sur le support d'impression de ladite image codée après l'impression de l'image codée
- Un film comportant l'image codée est apposé sur le support comportant les lentilles élémentaires.

La présente invention couvre aussi des machines mettant en œuvre les procédés décrits ci-avant.

Il est possible de réaliser de nombreux dispositifs selon la présente invention, qui se caractérisent par le fait qu'ils comportent des âmes transparentes formant des protubérances convexes, lesquelles sont recouvertes d'une ou plusieurs couches dites couches supplémentaires d'une substance formant également des protubérances convexes.

Les dispositifs selon l'invention peuvent être constitués de plusieurs couches d'encres de natures identiques ou différentes. Une couche dite supplémentaire peut être d'un indice de réfraction identique ou différent de la précédente, d'une coloration identique ou différente de la précédente, translucide, conductrice d'électricité ou isolante, réfléchissante. Elle peut se rétracter au froid, être adhésive, ou encore être photochromique, c'est-à-dire que sa transparence et/ou sa couleur peut (peuvent) être modifiée(s) par une variation de la température ou par un rayonnement particulier.

Les dispositifs selon l'invention comprennent un support d'impression 10 qui peut lui aussi être d'une nature particulière en fonction de l'élément optique à réaliser : transparent, translucide, d'un indice de réfraction différent de celui de l'encre transparente utilisée pour ladite première couche, réfléchissant, conducteur d'électricité ou isolant électrique.

Dans un mode de réalisation particulier, le support d'impression 10 est photochromique, ce qui permet de nombreuses applications comme par exemple la réalisation de couvertures esthétiques pour capteurs solaires, ou de parasols gênant le passage des rayons directs du soleil. Dans le premier cas, le support devient transparent à la chaleur ou à la lumière et dans le second, il devient au contraire sombre.

Lorsque le dispositif selon l'invention est une couverture de capteur solaire de chaleur, destiné à améliorer son esthétique ou à le cacher, le support photochromique doit laisse passer les rayons infrarouges. Lorsqu'il est une couverture de capteur solaire photovoltaïque, il doit laisser passer les rayons susceptibles d'être transformés en électricité par la cellule photovoltaïque utilisée.

Le support d'impression 10 des éléments optiques imprimés peut être rendu photochromique parce qu'il est composé de particules qui se rétractent ou se dilatent lorsque ledit matériau passe de la température dite basse à la température dite haute. Il peut dans ce cas être avantageux que lesdites particules soient enfermées dans des alvéoles.

Un dispositif selon l'invention peut produire de la chaleur, et il est alors avantageux de disposer une paroi conductrice de la chaleur derrière les lentilles élémentaires, de préférence à proximité immédiate de la surface de focalisation desdites lentilles élémentaires. Il peut aussi comprendre deux pellicules photochromiques, l'une claire et l'autre plus foncée. La pellicule claire est située côté lentilles élémentaires pour restituer de la lumière vers les spectateurs, et la pellicule sombre du côté opposé pour ne pas restituer de lumière de l'autre côté, et transformer la lumière en chaleur.

Les réseaux lenticulaires sont l'une des grandes applications importantes de la présente invention. Les éléments optiques imprimés dont dans ce cas des lentilles convergentes qui peuvent être jointives, et le support d'impression est transparent.

Pour beaucoup d'applications, lesdites lentilles convergentes sont avantageusement similaires et espacées régulièrement, pour former un réseau lenticulaire régulier. Les lentilles peuvent être cylindriques ou sphériques. Dans ce dernier cas, elles ont avantageusement une pupille en forme d'hexagone dont les côtés opposés sont parallèles entre eux, ou mieux encore des hexagones réguliers. Le dispositif peut être utilisé pour lire une image codée et produire des animations et des images en relief. Dans ce cas, la surface de focalisation d'une lentille convergente est avantageusement confondue avec la face opposée du support transparent 10 sur lequel elle est imprimée. Pour d'autres applications, il est au contraire avantageux que la surface de focalisation d'une lentille convergente soit proche de la face opposée du support transparent sur laquelle elle est imprimée, sans toutefois être confondue avec cette dernière. C'est en particulier le cas pour la réalisation d'écrans de projection et celle de dispositifs rétroréfléchissants (panneaux de signalisation routière par exemple).

Pour l'application à l'architecture, une lentille convergente est avantageusement placée sous une vitre pour être protégée des intempéries.

Un dispositif selon l'invention est aussi l'ensemble constitué par une image codée constituée d'images codées élémentaires coopérant avec un réseau de lentilles élémentaires. On peut utiliser un tel réseau lenticulaire pour produire des animations 3D mais aussi des images inintelligibles par le spectateur, ne pouvant être interprétées que par une caméra reliée à un ordinateur.

L'application de la présente invention aux réseaux lenticulaires peut se faire selon plusieurs dispositions différentes :
- une image codée élémentaire est imprimée du même coté du support d'impression 10 que la lentille élémentaire avec laquelle elle coopère ;
- ledit support d'impression 10 ou 20 selon le cas ayant reçu l'impression d'une image codée élémentaire est recouvert d'un à-plat d'encre transparente et de la lentille élémentaire avec laquelle elle coopère ;
- le support d'impression 10 ou 20 selon le cas ayant reçu l'impression d'une image codée élémentaire est recouvert d'un film transparent sur lequel est imprimée la lentille élémentaire avec laquelle elle coopère, cette lentille étant imprimée avant ou après l'assemblage dudit film transparent et de ladite image codée ;
- une image codée élémentaire est imprimée sur le verso du support d'impression 10 au recto duquel est imprimée la lentille élémentaire avec laquelle elle coopère.

Une application particulière consiste à ce que les protubérances élémentaires 11, 12, 13 et suivantes sont séparées par des surfaces transparentes et que des images élémentaires 21, 22, 23 et suivantes sont également séparées par des surfaces transparentes. Dans ce cas, le spectateur situé du côté des lentilles voit l'animation 3D, et celui situé de l'autre côté voit à travers les surfaces transparentes, d'autant plus facilement que la face opposée aux lentilles du dispositif est foncée. De tels produits sont avantageusement autocollants pour être apposés aux vitres des immeubles. On peut obtenir un résultat similaire avec un support d'impression 10 percé de trous.

Pour réaliser des réseaux lenticulaires à longueur focale élevée, l'espace entre le réseau lenticulaire 1 et la surface de focalisation 2 est avantageusement un volume d'air. Ces deux composants peuvent être souples pour pouvoir être enroulés et l'écartement peut être maintenu constant en position de fonctionnement par des cales en mousse 5a et 5b comme celles représentées aux figures 19a à 19c, ou par tout autre système connu. Ce volume peut aussi être gonflé à la condition que l'enceinte soit hermétique. Une des applications de cette disposition est celle des couvertures de piscines.

Une application de la présente invention est un revêtement réflectorisant : un film transparent 10 comportant des lentilles convergentes 11, 12 et suivantes, de préférence moins épais que la longueur focale desdites lentilles élémentaires. La lumière parvenant à ce dispositif est renvoyée sensiblement vers sa source, en prenant la couleur qu'a la surface située derrière chaque lentille convergente. Les rayons lumineux sont renvoyés non pas uniquement en direction de leur source mais aussi dans les environs immédiats. Le film transparent 10 est avantageusement déformable pour le cas où l'on souhaite appliquer le dispositif sur une carrosserie de voiture par exemple, afin de la rendre rétroréfléchissante.

En disposant une surface blanche au verso du film transparent, un tel dispositif est un écran de projection. Pour cette application, une lentille convergente élémentaire est avantageusement asphérique - déformée en largeur pour que des rayons parallèles l'atteignant convergent sur une surface plus large que haute et non pas sur un point-ce qui permet de diffuser la lumière renvoyée par l'écran vers un domaine de visibilité plus large que haut, correspondant à l'emplacement des spectateurs. L'invention est aussi un système de projection comprenant un projecteur et un dispositif comme celui qui vient d'être décrit.

Une application voisine est un écran de rétroprojection : le support d'impression 10 sur lequel est imprimée une protubérance est transparent, les protubérances convexes sont des lentille convergente 11, 12 et suivantes, et il existe une surface située au verso du support d'impression 10, qui est peu réfléchissante à l'exception de petites surfaces transparentes ou translucides qui sont sensiblement alignées avec d'une part un point P dit « point du projecteur » situé à distance du dispositif du côté des lentilles élémentaires, et d'autre part les centres optiques desdites lentilles convergentes 11 12 et suivantes. La présente invention permet ainsi enfin de mettre en œuvre celle faite par TAKEO SHIMIZU (US 1 942 841 - Daylight Screen - 9 janvier 1934) qui avait à l'époque décrit un écran comportant un ensemble de minuscules lentilles convergentes au recto, et une face arrière noircie à l'exception des points où la lumière du projecteur converge, qui sont transparentes. Ces petites surfaces transparentes ou translucides peuvent par exemple être créées en brûlant la surface peu réfléchissante située au verso du support d'impression avec une source de rayonnement infrarouge placée là où sera ensuite placé le projecteur. Les matières brûlées peuvent ensuite être supprimées par brossage ou tout autre procédé connu.

Dans une variante, le dispositif comprend une autre lentille convergente sur la face opposée du support transparent sur laquelle elle est imprimée. Les lentilles sont situées en vis-à-vis, ce qui est possible avec le procédé décrit ci-avant. Dans cette variante aussi, ces lentilles du verso peuvent être créées en polymérisant une encre appliquée au verso avec une source de rayonnement UV placée là où sera ensuite placé le projecteur.

Dans ces deux variantes, l'invention est aussi un système de rétroprojection comprenant un projecteur et un dispositif à réseau lenticulaire selon l'invention.

Au lieu que deux lentilles situées respectivement au recto et au verso du support d'impression transparent 10 soient parfaitement en vis-à-vis, une différence de parallaxe peut être organisée afin que les centres optiques de ces lentilles situées au verso soient alignés d'une part avec le centre optique de l'objectif du projecteur et d'autre part avec les centres optiques des lentilles élémentaires situées au recto.

Un perfectionnement des réseaux lenticulaires rendu possible par la présente invention consiste à utiliser des images codées élémentaires dont la surface est courbe, correspondant sensiblement au domaine de focalisation de la lentille élémentaire considérée. L'avantage est une meilleure netteté pour les spectateurs qui ne sont pas situés face au dispositif, et donc une augmentation du nombre possible d'images représentées. Comme on le voit sur la figure 13, les images codées élémentaires 21b, 22b et 23b et suivantes peuvent être partiellement superposées aux images codées élémentaires 21a, 22a et 23a. Cette disposition des images élémentaires permet de voir des images à partir d'emplacements qui ne le permettaient pas avec des images codées élémentaires plates.

On peut en profiter pour ajouter au dispositif un dispositif de vision à détermination de la parallaxe comme celui illustré par la figure 14, par exemple une simple boule miroir 60. Le spectateur voit sur cette boule l'image composée des pixels des images élémentaires situées dans l'alignement des centres optiques des lentilles élémentaires dudit réseau lenticulaire, ici la mention « OK ». La boule peut être remplacée par une caméra. Ce dispositif ouvre aux réseaux lenticulaires selon l'invention des applications dans le domaine de l'impression de sécurité. Ces applications étaient impossibles dans l'art antérieur parce qu'on ne pouvait pas repérer avec une précision suffisante une image codée élémentaire et une lentille élémentaire. Dans un mode perfectionné, l'ensemble des images visibles par le spectateur n'est pas intelligible et ne peut être interprété que par une caméra reliée à un ordinateur.

Pour fabriquer une image codée élémentaire dont la surface est courbe, on peut imprimer successivement plusieurs épaisseurs d'encre comme c'est illustré aux figures 11 et 12. L'ensemble est avantageusement recouvert ensuite d'une couche d'encre finale déterminant une forme courbe lissée, sur laquelle est ensuite imprimée l'image codée.

La présente invention permet aussi de réaliser des fibres optiques par toute technique d'impression à balayage. Dans ce cas, la surface du support d'impression 10 sur laquelle est imprimée une protubérance est « réflective », et l'une des couches dites supplémentaires est également « réflective ». On entend par « réflectif » la caractéristique qu'a un matériau de réfléchir les rayons parvenant d'un volume d'un premier matériau sur ledit matériau « réflectif » avec une forte incidence (un angle élevé avec une normale à la surface du matériau), ce qui est le cas si ledit matériau est réfléchissant, et aussi si son indice de réfraction est sensiblement inférieur à celui dudit premier matériau.

Ces fibres peuvent comporter des points non recouverts dudit matériau réflectif laissant échapper la lumière pour créer des guirlandes lumineuses, ou avoir des zones où le support d'impression 10 ou la couche supplémentaire réfléchissante sont transparents, pour obtenir le même effet.

Une fibre optique peut être recouverte d'une couche gênant le passage de la lumière, par exemple réfléchissante ou à indice de réfraction plus faible que l'encre utilisée pour la création de l'âme des fibres optiques. Elle peut alors être recouverte d'une autre fibre optique, et cela ouvre la voie à la réalisation de circuits optoélectroniques multicouches. L'orientation des rayons lumineux transportés par fibre optique doit rester la plus proche possible de l'axe longitudinal de la fibre, et de nombreux phénomènes connus ont au contraire pour effet de modifier cette orientation pour écarter les rayons lumineux de cet axe. La présente invention prévoit un dispositif illustré à la figure 7 pour remédier à cela. Ce dispositif comprend un volume allongé 40 transparent dit « redresseur » recouvert d'un revêtement réfléchissant, comprenant un axe longitudinal, dont l'extrémité recevant la lumière dite extrémité amont est plus étroite que l'autre extrémité dite extrémité aval, et au moins un volume allongé transparent dit « concentrateur » 51 recouvert d'un revêtement réfléchissant, comprenant un axe longitudinal, dont l'extrémité recevant la lumière dite extrémité amont est plus large que l'autre extrémité dite extrémité aval.

Il est avantageux que l'allongement dudit concentrateur soit supérieur à celui dudit redresseur, étant précisé que l'on entend ci-avant par allongement le rapport L/D entre d'une part la longueur « L » de l'amont à l'aval du composant considéré, et d'autre part la valeur absolue de la différence de largeur « D » de ses extrémités amont et aval. Dans un mode de réalisation préféré, un redresseur est avantageusement associé à plus d'un concentrateur. C'est le cas en particulier lorsqu'il comprend une fente longitudinale 70 qui sépare deux concentrateurs 51 et 52, comme représenté à la figure 7. Dans une variante, un redresseur a des bords en forme de parabole de foyer P, et une extrémité amont rectiligne passant par ledit foyer P, ce qui a pour effet de rendre tous les rayons lumineux parallèles à l'axe longitudinal du dispositif (représenté par l'élément 40 de la figure 7). Les redresseurs/concentrateurs peuvent être associés en série comme représenté à la figure 8, pour améliorer leur efficacité.

On peut aussi munir un tel dispositif d'un capteur de lumière qui reçoit la lumière par sa surface amont - perpendiculaire à la surface du support d'impression 10 comme représenté à la figure 8 - qui est transparente. De tels dispositifs peuvent être associés en parallèle pour créer un capteur de lumière ambiante, par exemple le capteur de lumière 1001 représenté à la figure 16.

Un autre capteur de lumière selon l'invention est représenté à la figure 20. Il est composé d'un réseau lenticulaire à lentilles élémentaires sphériques 11, 12 et suivantes, coopérant avec une plaque 500 comportant des entrées de fibres optiques 511, 512 et suivantes. Des tiges 401, 402 et suivantes permettent d'aligner une desdites entrées de fibres optiques et un centre optique d'une desdites lentilles élémentaires avec la source lumineuse. Le déplacement relatif dudit réseau lenticulaire et de ladite plaque 500 du dispositif peut être motorisé et piloté par un ordinateur. Le plan du réseau lenticulaire est sensiblement parallèle à celui de la plaque 500, et de préférence orienté pour être dans un plan orthogonal aux rayons moyens issus de la source lumineuse.

Deux fibres optiques peuvent être imprimées en Y pour constituer un répartiteur ou un mélangeur de rayons lumineux : une fibre comprenant une section élargie se divisant en deux, ou deux fibres fusionnant en une seule.

Une grande application de la présente invention est la réalisation de nappes de fibres optiques parallèles entre elles, qui peuvent être accolées comme représenté à la figure 9. De telles nappes peuvent être raccordées par un dispositif représenté à la figure 10, qui comporte des tuyaux dont la paroi intérieure est réfléchissante, chacune des extrémités d'un tuyau coopérant avec une fibre optique d'une nappe de fibre optiques imprimées. Un tel connecteur peut comporter un moyen mécanique d'interrompre le passage de la lumière, comme par exemple le poussoir 100 représenté à la figure 10. L'extrémité aval d'une fibre optique imprimée diffuse la lumière qu'elle transporte, et il suffit de recouvrir cette extrémité d'un matériau réfléchissant convenablement orienté pour réfléchir la lumière vers le spectateur, par exemple vers le support d'impression 10 (transparent à cet endroit) sur lequel elle est imprimée. Avantageusement, la forme de cette extrémité se rapproche de celle d'une lentille convexe sensiblement plus large que ladite fibre optique, pour constituer le pixel 11 d'une image, comme représenté à la figure 15. La fibre optique apportant la lumière peut aussi contourner une protubérance imprimée pour que la section de son extrémité soit située dans un plan sensiblement différent d'un plan perpendiculaire au plan du support d'impression 10 (non représenté).

Selon la présente invention, on peut donc réaliser des écrans de diffusion organisée ou non de lumière. Il suffit pour cela qu'une protubérance convexe dite pixel comporte une extrémité d'une fibre optique imprimée dont l'autre extrémité est reliée à une source lumineuse. Ledit pixel est avantageusement recouvert d'une couche d'encre réfléchissante, du côté opposé au spectateur. Côté spectateur, ledit pixel peut être coloré en rouge, en vert ou en bleu. Trois pixels adjacents constituent alors un triplet RVB (Rouge Vert Bleu), et l'écran peut diffuser des images en couleurs, fixes ou animées. On peut aussi imprimer une image sur l'ensemble desdits pixels pour créer une image lumineuse. Même en n'imprimant rien, on réalise à moindre frais un dispositif de rétroéclairage très mince.

En munissant un tel écran d'un moyen connu 8 de limitation électronique de la lumière comme un cristal liquide, on peut créer un écran vidéo ultra-mince, qui peut par exemple être enroulé sur lui-même pour le stockage. La fréquence de rafraîchissement dudit moyen de limitation électronique de la lumière peut être supérieure à la fréquence de rafraîchissement de l'ensemble desdits pixels et le dispositif comporte dans ce cas avantageusement un miroir pivotant permettant de réfléchir la lumière transmise à travers ledit dispositif électronique de filtrage, séquentiellement vers différents sous-ensembles des extrémités desdites fibres optiques.

On peut raccorder des sous-ensembles de pixels à des sources lumineuses différentes. Le principe du brevet US 5 293 437 - déposé le 12 juin 1992 - qui consiste à ce qu'un sous-ensemble desdits pixels reçoive la lumière d'une source lumineuse rouge, qu'un sous-ensemble desdits pixels reçoive la lumière d'une source lumineuse bleue, et qu'un sous-ensemble desdits pixels reçoive la lumière d'une source lumineuse verte peut enfin être mis en œuvre facilement.

On connaît la demande FR/09-01324 qui consiste à diffuser deux images œil droit et œil gauche formant un couple stéréoscopique par une série de couleurs correspondant à des longueurs d'ondes différentes, en synthèse additive ou soustractive, ce qui permet à un spectateur muni de lunettes dont chaque filtre bloque au moins partiellement la vision des plages de longueurs d'onde utilisées pour émettre l'image destinée à l'autre œil permet de voir le relief. Les deux images sont affichées sur des portions différentes du dispositif d'affichage. La présente invention se prête particulièrement bien à la mise en œuvre de l'objet de la demande FR/09-01324 : deux sous-ensembles desdits pixels émettent de la lumière dans deux longueurs d'onde sensiblement différentes de couleur rouge, deux sous-ensembles desdits pixels émettent de la lumière dans deux longueurs d'onde sensiblement différentes de couleur verte, et deux sous-ensembles desdits pixels émettent de la lumière dans deux longueurs d'onde sensiblement différentes de couleur bleue. Une image dite image œil droit est émise par la synthèse additive de l'une des deux longueurs d'onde de couleur rouge, de l'une des deux longueurs d'onde de couleur verte, et de l'une des deux longueurs d'onde de couleur bleue, et l'autre image dite œil gauche est émise par la synthèse additive de l'autre des deux longueurs d'onde de couleur rouge, de l'autre des deux longueurs d'onde de couleur verte, et de l'autre des deux longueurs d'onde de couleur bleue.

On connaît différents types de dispositifs permettant de capter la lumière du soleil ou la lumière ambiante, comme en particulier ceux décrits aux figures 8 et 20. La présente invention permet de relier de tels dispositifs à l'extrémité d'une fibre optique imprimée, l'autre extrémité de ladite fibre étant reliée à un pixel d'un écran. On peut ainsi diffuser la lumière dans une pièce qui n'a pas d'ouverture vers la lumière de l'extérieur, en reliant un pixel 11 ou un écran constitué de tels pixels par une fibre optique ou une nappe de fibres à un tel capteur de lumière situé à l'extérieur.

On a vu que la présente invention permettait de réaliser des moyens de rétroéclairage fins et bon marché. Une mise en œuvre particulièrement avantageuse consiste à ce que ledit moyen de captation de la lumière soit dans ce cas situé sur le bord du dispositif de rétroéclairage, c'est-à-dire sur la périphérie de la surface comprenant lesdits pixels.

La présente invention permet de réaliser des claviers de toutes sortes, par exemple en utilisant une protubérance transparente constituée d'un volume transparent compressible entouré d'un matériau réfléchissant, ou un interrupteur de lumière comme celui représenté à la figure 10. Dans un modèle simplifié, la partie mobile 100 peut être remplacée par un doigt de l'utilisateur.

Elle permet aussi de réaliser des capteurs solaires. On munit alors le dispositif d'un échangeur thermique pour constituer un dispositif de chauffage. Le dispositif peut être flottant pour constituer une couverture de piscine réchauffant l'eau. On peut aussi le munir de semi-conducteurs pour constituer un capteur photovoltaïque. Des enceintes telles que des serres peuvent aussi être un dispositif selon la présente invention, dès lors qu'elles sont munies d'un capteur solaire selon l'un des modes précédemment décrits.

Il existe de nombreuses méthodes pour assembler une image codée 2 avec un réseau lenticulaire 1 selon la présente invention.
- L'image codée peut être imprimée sur un film électrostatique amovible appliqué sur la face du support d'impression 10 opposée aux lentilles élémentaires. Cela permet de changer facilement d'image codée, tout en bénéficiant de la géométrie fixe du réseau lenticulaire lors de l'impression (alors qu'un film électrostatique mince n'a pas de tenue).
- Une feuille électrostatique peut emprisonner ladite image codée entre ledit réseau lenticulaire et ladite feuille électrostatique, à la condition que ladite feuille électrostatique déborde de ladite image codée pour adhérer par électrostatisme directement audit réseau lenticulaire.
- Une feuille autocollante peut emprisonner ladite image codée entre ledit réseau lenticulaire et ladite feuille autocollante, ladite feuille autocollante débordant de ladite image codée pour adhérer directement audit réseau lenticulaire, et un volume élastique comme une mousse souple à cellules ouvertes est comprimé lors de l'assemblage du dispositif, pour que lorsqu'il cherche à reprendre son volume initial, il absorbe l'air résiduel situé entre l'image codée et la face arrière du réseau lenticulaire.
- Les lentilles élémentaires peuvent être imprimées sur un support d'impression 10, séparé du support d'impression 20 de l'image codée 2 comme représenté aux figures 19 a à 19c, les deux supports 10 et 20 étant maintenus à distance l'un de l'autre par tout moyen mécanique connu.

Les applications de la présente invention se situent dans les domaines de l'imprimerie, et en particulier de l'imprimerie d'art ou fantaisie, dans le domaine des réseaux lenticulaires, des circuits optiques, des fibres optiques, des écrans vidéo, des luminaires, des capteurs optiques, de l'optoélectronique, etc.

## Revendications

1. Procédé de fabrication d'éléments optiques imprimés (11, 12, 13, 14), consistant successivement :
∘ à imprimer par une technique d'impression à jet d'encre, une première couche d'une substance liquide transparente sur des surfaces élémentaires d'un support d'impression (10) pour former des ébauches de protubérances convexes dites âmes (111, 121, 131, 141),
∘ à solidifier lesdites âmes (111, 121, 131, 141) par tout moyen connu comme le refroidissement, le séchage ou la polymérisation,
∘ et à imprimer ensuite, par ladite technique d'impression à jet d'encre, au moins une couche supplémentaire (112, 113, 122, 123, 132, 133, 142, 143) d'une substance liquide, chaque couche supplémentaire (112, 113, 122, 123, 132, 133, 142, 143) étant solidifiée par tout moyen connu comme le refroidissement, le séchage ou la polymérisation, pour former des protubérances convexes constituant des éléments optiques imprimés (11, 12, 13, 14),
**caractérisé en ce que** :
∘ la substance liquide transparente servant à l'impression des âmes (111, 121, 131, 141) sur le support d'impression (10)a une tension superficielle plus élevée que celle du reste de la surface du support d'impression (10), l'encre de la première couche étant appliquée sur les surfaces élémentaires en forme d'à-plats,
∘ la substance liquide constituant ladite au moins une couche supplémentaire (112, 113, 122, 123, 132, 133, 142, 143) a une tension superficielle sensiblement plus élevée que celle du reste de la surface du support non recouverte par des âmes (111, 121, 131, 141) et est imprimée sur une partie au moins desdites âmes (111, 121, 131, 141) formées sur le support d'impression (10), de telle sorte qu'après solidification et selon la forme souhaitée pour ladite protubérance, une partie de la couche supplémentaire déposée sur une âme (111, 121, 131, 141) occupe une surface du support d'impression (10) identique ou sensiblement plus petite ou plus grande que l'âme considérée (111, 121, 131, 141),
étant précisé que la « technique d'impression à jet d'encre » comprend le dépôt d'une substance liquide dite «encre » sur un support d'impression par bandes successives d'un bord dudit support d'impression au bord opposé, par opposition à une technique d'impression par traçage, qui consiste à déplacer un dispositif de dépôt le long de chacune des courbes à tracer sur ledit support d'impression.

2. Procédé selon la revendication 1, **caractérisé en ce qu'**il comporte en outre l'impression d'une couche d'encre créant des barrières physiques (1200) gênant l'étalement d'une couche supplémentaire en dehors des zones prévues pour lesdites protubérances convexes constituant des éléments optiques imprimés (11, 12, 13, 14).

3. Procédé selon la revendication 1 ou la revendication 2, **caractérisé en ce qu'**un film intermédiaire (10) est apposé sur une image codée (21) formée sur un support (20) avant l'impression desdits éléments optiques imprimés (11, 12, 13, 14) sur ledit film intermédiaire constituant ledit support d'impression (10), lesdits éléments optiques imprimés constituant des lentilles élémentaires.

4. Procédé selon la revendication 1 ou la revendication 2, **caractérisé en ce qu'**un film intermédiaire (10) est apposé sur une image codée (21) formée sur un support (20) après l'impression desdits éléments optiques imprimés (11, 12, 13, 14) sur ledit film intermédiaire constituant ledit support d'impression (10), lesdits éléments optiques imprimés constituant des lentilles élémentaires.

5. Procédé selon la revendication 1, **caractérisé en ce que** chaque élément optique imprimé comprend une surface constituée d'une encre aqueuse.

6. Procédé selon la revendication 1, **caractérisé en ce que** les protubérances convexes constituant des éléments optiques imprimés constituent des lentilles convergentes élémentaires (11), et **en ce que** des images codées élémentaires (21) coopèrent respectivement avec lesdites lentilles élémentaires (11) et ont chacune une surface courbe correspondant sensiblement au domaine de focalisation de la lentille élémentaire correspondante (11).

## Patentansprüche

1. Verfahren zur Herstellung optischer Druckelemente (11, 12, 13, 14), das aus folgenden Schritten besteht:
- dem Drucken einer ersten Schicht einer flüssigen Substanz auf elementaren Flächen eines Druckträgers (10) mithilfe der Tintenstrahldrucktechnik, um konvexe Rohlinge für Vorsprünge, genannt Kerne (111, 121, 131, 141), zu bilden,
- dem Verfestigen der Kerne (111, 121, 131, 141) durch bekannte Mittel wie Kühlen, Trocknen oder Polymerisation,
- anschließend dem Drucken von zumindest einer zusätzlichen Schicht (112, 113, 122, 123, 132, 133, 142, 143) einer flüssigen Substanz mithilfe der Tintenstrahldrucktechnik, wobei jede zusätzliche Schicht (112, 113, 122, 123, 132, 133, 142, 143) über bekannte Mittel wie Kühlung, Trocknung oder Polymerisation gefestigt werden, um konvexe Vorsprünge zu bilden, die optische Druckelemente (11, 12, 13, 14) bilden,
**dadurch gekennzeichnet, dass**:
- die transparente flüssige Substanz, die zum Drucken der Kerne (111, 121, 131, 141) auf dem Druckträger (10) dient, eine größere Oberflächenspannung hat, als die übrige Fläche des Druckträgers (10), wobei die Farbe der ersten Schicht auf den elementaren Flächen in Form einer Vollfläche aufgetragen wird,
- die flüssige Substanz, welche die zumindest eine zusätzliche Schicht (112, 113, 122, 123, 132, 133, 142, 143) bildet, eine im Wesentlichen größere Oberflächenspannung hat, als die übrige Oberfläche der nicht von den Kernen (111, 121, 131, 141) bedeckten Oberfläche und zumindest auf einen Teil der auf dem Druckträger (10) gebildeten Kerne (111, 121, 131, 141) gedruckt wird, sodass nach der Verfestigung und in der für den Vorsprung gewünschten Form ein Teil der zusätzlich auf einen Kern (111, 121, 131, 141) aufgetragenen Schicht eine Fläche des Druckträgers (10) einnimmt, die identisch oder im Wesentlichen kleiner oder größer als der Kern (111, 121, 131, 141) ist,
- wobei darauf hingewiesen wird, dass die "Tintenstrahldrucktechnik" das Auftragen einer flüssigen Substanz, genannt "Farbe", auf einem Druckträger durch aufeinanderfolgende Streifen von einem Rand des Druckträgers zum gegenüberliegenden Rand umfasst, im Gegensatz zur Technik des Plottens, bei der sich eine Auftragsvorrichtung entlang der auf besagten Druckträger zu plottenden Kurven bewegt.

2. Verfahren nach Anspruch 1, **dadurch gekennzeichnet, dass** es des Weiteren den Druck einer Farbschicht umfasst, die physikalische Barrieren (1200) bildet, die die Ausweitung einer zusätzlichen Schicht über die für die konvexen Vorsprünge, welche die optischen Druckelemente (11, 12, 13, 14) bilden, vorgesehenen Bereiche hinaus .

3. Verfahren nach Anspruch 1 oder Anspruch 2, **dadurch gekennzeichnet, dass** eine Zwischenfolie (10) auf ein codiertes Bild (21), das auf einem Träger (20) gebildet wird, bevor dem Drucken der optischen Druckelemente (11, 12, 13, 14) auf besagter Zwischenfolie, welche den Druckträger (10) bildet, aufgebracht wird, wobei die optischen Druckelemente elementare Linsen bilden.

4. Verfahren nach Anspruch 1 oder Anspruch 2, **dadurch gekennzeichnet, dass** eine Zwischenfolie (10) auf ein codiertes Bild (21), das auf einem Träger (20) gebildet wird, nach dem Drucken der optischen Druckelemente (11, 12, 13, 14) auf besagter Zwischenfolie, welche den Druckträger (10) bildet, aufgebracht wird, wobei die optischen Druckelemente elementare Linsen bilden.

5. Verfahren Anspruch 1, **dadurch gekennzeichnet, dass** jedes optische Druckelement eine Fläche umfasst, die aus einer wässrigen Farbe besteht.

6. Verfahren nach Anspruch 1, **dadurch gekennzeichnet, dass** die konvexen Vorsprünge, welche die optischen Druckelemente bilden, elementare konvergierende Linsen (11) bilden, und dadurch, dass die elementaren codierten Bilder (21) jeweils mit den elementaren Linsen (11) zusammenwirken und jeweils eine gekrümmte Fläche haben, die im Wesentlichen dem Fokusbereich der entsprechenden elementaren Linse (11) entsprechen.

## Claims

1. Method of manufacturing printed optical elements (11, 12, 13, 14), successively consisting in:
o printing, using an inkjet printing technique, a first layer of a transparent liquid substance on elementary surfaces of a printing substrate (10) to form outlines of convex protrusions, so-called cores (111, 121, 131, 141),
o solidifying said cores (111, 121, 131, 141) by any known means, such as cooling drying or polymerisation,
o and in subsequently printing, by said inkjet printing technique, at least one additional layer (112, 113, 122, 123, 132, 133, 142, 143) of a liquid substance, wherein each additional layer (112, 113, 122, 123, 132, 133, 142, 143) is solidified by any known means, such as cooling, drying or polymerisation, to form convex protrusions constituting printed optical elements (11, 12, 13, 14),
**characterised in that**:
o the transparent liquid substance used to print the cores (111, 121, 131, 141) on the printing substrate (10) has a surface tension greater than that of the remainder of the surface of the printing substrate (10), wherein the ink of the first layer is applied to the elementary surfaces in the form of solid print areas,
∘ the surface tension of the liquid substance constituting said at least one additional layer (112, 113, 122, 123, 132, 133, 142, 143) is substantially higher than that of the remainder of the surface of the substrate not covered with cores (111, 121, 131, 141) and is printed on a portion at least of said cores (111, 121, 131, 141) formed on the printing substrate (10), such that after solidification and depending on the desired shape for said protrusion, part of the additional layer applied to a core (111, 121, 131, 141) occupies a surface of the printing substrate (10) identical or substantially smaller or larger than the core in question (111, 121, 131, 141),
its being specified that the "inkjet printing technique" comprises depositing a liquid substance termed "ink" on a printing substrate in successive strips from an edge of said printing substrate to the opposite edge, in contrast to a printing technique by plotting, which involves moving a deposition device along each of the curves to be plotted on said printing substrate.

2. Method according to claim 1, **characterised in that** it furthermore comprises printing of a layer of ink creating physical barriers (1200) impeding spreading of an additional layer outside the areas intended for said convex protrusions constituting the printed optical elements (11, 12, 13, 14).

3. Method according to claim 1 or claim 2, **characterised in that** an intermediate film (10) is applied to a coded image (21) formed on a substrate (20) before printing said printed optical elements (11, 12, 13, 14) on said intermediate film constituting said printing substrate (10), wherein said printed optical elements constitute elementary lenses.

4. Method according to claim 1 or claim 2, **characterised in that** an intermediate film (10) is applied to a coded image (21) formed on a substrate (20) after printing said printed optical elements (11, 12, 13, 14) on said intermediate film constituting said printing substrate (10), wherein said printed optical elements constitute elementary lenses.

5. Method according to claim 1, **characterised in that** each printed optical element comprises a surface consisting of a water-based ink.

6. Method according to claim 1, **characterised in that** the convex protrusions constituting the printed optical elements form elementary converging lenses (11), and **in that** elementary coded images (21) interact respectively with said elementary lenses (11) and each have a curved surface substantially corresponding to the area of focus of the corresponding elementary lens (11) .
